# EUROPEAN PATENT APPLICATION

(11) **EP 4 132 137 A1**
(43) Date of publication of application: **08.02.2023**
(21) Application number: 21792822.5
(22) Date of filing: 16.04.2021
(51) Int. Cl.: H04W 60/00, H04W 76/10

(54) **COMMUNICATION METHOD AND SYSTEM**

(30) Priority: 23.04.2020 CN 202010327368
(71) Applicant: Huawei Technologies Co., Ltd., Shenzhen, Guangdong 518129, (CN)
(72) Inventor: SUN, Zhenqi, Shenzhen, Guangdong 518129 (CN)
(74) Representative: Pfenning, Meinig & Partner mbB
(86) International application number: PCT/CN2021/087860
(87) International publication number: WO 2021/213282

(57) **Abstract**

This application relates to a communication method for use in a customer premises equipment, including: implementing, by the customer premises equipment in a wireless communication mode, a call between the customer premises equipment and a network side on a first terminal device, where the call includes a call terminating flow and a call originating flow, in the call terminating flow, the implementing the call between the customer premises equipment and a network side on a first terminal device includes: sending, by the customer premises equipment, the call to the first terminal device in the wireless communication mode in response to the call received from the network side and destined for the customer premises equipment; and in the call originating flow, the implementing the call between the customer premises equipment and a network side on a first terminal device includes: initiating, by the customer premises equipment, the call to the network side in response to a call setup message received from the first terminal device in the wireless communication mode. In this application, a user may move freely within coverage of a wireless communication network between the customer premises equipment and the terminal device.

## Description

This application claims priority to Chinese Patent Application No. 202010327368.4, filed with the China National Intellectual Property Administration on April 23, 2020 and entitled "COMMUNICATION METHOD AND SYSTEM", which is incorporated herein by reference in its entirety.

### TECHNICAL FIELD

One or more embodiments of this application generally relate to the communications field, and specifically, to a communication method and system.

### BACKGROUND

Customer premises equipments (Customer Premises Equipment, CPE) are a type of devices that have SIM cards inserted and that are capable of converting 3G/4G/5G cellular mobile network signals into Wi-Fi signals to provide Wi-Fi networks for terminals. CPEs have built-in modulation and demodulation modules to support both Internet access and voice calls. The modulation and demodulation modules of some CPEs also support EVS (Enhanced Voice Service) high-definition codec.

Since CPEs do not have input/output modules such as loudspeakers or microphones, the voice call function of CPEs is currently implemented by connecting to analog phones over the RJ11 interfaces by using analog lines. In this case, a cabling issue needs to be considered, and immobility of analog phones leads to poor user experience. In addition, analog lines can transmit only narrowband voice signals, and analog phones can process only narrowband voice signals. Therefore, even if the modulation and demodulation modules of CPEs support EVS high-definition codec, users cannot experience high-definition voice calls.

### SUMMARY

Some implementations of this application provide a communication method and system. The following describes this application from a plurality of aspects. For implementations and beneficial effects of the following plurality of aspects, reference may be made to each other.

A first aspect of this application provides a communication method for use in a customer premises equipment. The method may include:
implementing, by the customer premises equipment in a wireless communication mode, a call between the customer premises equipment and a network side on a first terminal device, where the call includes a call terminating flow and a call originating flow,
in the call terminating flow, the implementing a call between the customer premises equipment and a network side on a first terminal device includes: sending, by the customer premises equipment, the call to the first terminal device in the wireless communication mode in response to the call received from the network side and destined for the customer premises equipment; and
in the call originating flow, the implementing a call between the customer premises equipment and a network side on a first terminal device includes: initiating, by the customer premises equipment, the call to the network side in response to a call setup message received from the first terminal device in the wireless communication mode.

According to this embodiment of this application, since the customer premises equipment implements the call between the customer premises equipment and the network side on the terminal device in the wireless communication mode, a user can move freely within coverage of a wireless communication network between the customer premises equipment and the terminal device, which optimizes user experience.

In some embodiments, the method further includes:
before implementing the call by the customer premises equipment on the first terminal device, in the wireless communications mode,
receiving a registration request message from the first terminal device; and
when determining that the first terminal device meets a predefined condition, recording the first terminal device as being in an online state, and sending a registration success message to the first terminal device.

According to this embodiment of this application, the customer premises equipment may learn about a registered terminal device through a registration process. In this way, when the customer premises equipment receives, as a called party, a call from the network side, the customer premises equipment may send the call to the terminal device recorded as being in the online state. In addition, the terminal device that receives the registration success message may display its online state, so that the user may send a call setup message to the customer premises equipment through the terminal device, so that the customer premises equipment initiates a call to the network side 11.

In some embodiments, the method further includes:
determining, by the customer premises equipment, a time interval between a time at which the registration request message is last received from the first terminal device and a current time; and
when the customer premises equipment determines that the time interval is greater than or equal to a predefined time interval, recording the first terminal device as being in an offline state.

According to this embodiment of this application, the customer premises equipment records the terminal device as being in the offline state, and when receiving a call destined for the customer premises equipment from the network side, the customer premises equipment may not send the call to the terminal device recorded as being in the offline state.

In some embodiments, in the call terminating flow, the sending, by the customer premises equipment, the call to the first terminal device includes:
sending an incoming call message to the first terminal device;
receiving an answer message from the first terminal device, where the answer message indicates that a type of the call is voice call or video call;
performing media negotiation with the network side based on an audio or video codec type supported by the first terminal device and the type of the call;
sending a negotiation notification message to the first terminal device, where the negotiation notification message includes a result of the media negotiation; and
sending a media data packet from the network side to the first terminal device and/or sending the media data packet from the first terminal device to the network side.

According to this embodiment of this application, the customer premises equipment and the terminal device perform incoming call indication and answer actions based on messages sent through wireless connections. The answer message sent by the terminal device indicates the type of the call. The customer premises equipment may perform media negotiation with the network side based on the audio and/or video codec type supported by the terminal device. The terminal device may support codecs such as high-definition voice EVS-WB, EVS-SWB, and EVS-FB. In addition, when the terminal device further supports video calls, video communication may be negotiated as a communication mode, and video formats such as low definition, standard definition, and high definition are supported.

In some embodiments, the registration request message or the answer message received from the first terminal device includes the audio and/or video codec type supported by the first terminal device.

In some embodiments, the answer message further includes an address of the first terminal device for receiving and/or sending the media data packet; and
the negotiation notification message further includes an address of the customer premises equipment for receiving and/or sending the media data packet.

In some embodiments, in the call terminating flow, the method further includes the following operations of the customer premises equipment in the wireless communications mode:
sending the incoming call message to a second terminal device recorded as being in an online state; and
sending a call terminating message to the second terminal device in response to the answer message received from the first terminal device.

In some embodiments, in the call originating flow, the call setup message indicates that a type of the call is voice call or video call and indicates an identifier of a called user, and the initiating, by the customer premises equipment, the call to the network side includes:
sending a call request message to the network side, where the call request message includes the type of the call, an audio or video codec type supported by the first terminal device, and the identifier of the called user;
sending a ringback tone message to the first terminal device, where the ringback tone message indicates the first terminal device to play a ringback tone;
performing media negotiation with the network side based on the audio or video codec type supported by the first terminal device and the type of the call;
sending a negotiation notification message and a call answer indication to the first terminal device, where the negotiation notification message includes a result of the media negotiation; and
sending a media data packet from the network side to the first terminal device and/or sending the media data packet from the first terminal device to the network side.

According to this embodiment of this application, the call setup message sent by the terminal device indicates the type of the call. The customer premises equipment may perform media negotiation with the network side based on the audio and/or video codec type supported by the terminal device. The terminal device may support codecs such as high-definition voice EVS-WB, EVS-SWB, and EVS-FB. In addition, when the terminal device further supports video calls, video communication may be negotiated as a communication mode, and video formats such as low definition, standard definition, and high definition are supported.

In some embodiments, the registration request message or the call setup message includes the audio and/or video codec type supported by the first terminal device.

In some embodiments, the call setup message received from the first terminal device further includes an address of the first terminal device for receiving and/or sending the media data packet; and
the negotiation notification message further includes an address of the customer premises equipment for receiving and/or sending the media data packet.

In some embodiments, in the call terminating flow, the sending, by the customer premises equipment, the call to the first terminal device includes, in the wireless communication mode:
receiving a call handover message from the first terminal device;
determining whether there is a terminal device recorded as being in an online state in addition to the first terminal device; and
when determining that there is no terminal device recorded as being in the online state in addition to the first terminal device, sending a handover failure message to the first terminal device; or
when determining that there is a third terminal device recorded as being in the online state in addition to the first terminal device, sending the call to the third terminal device and sending a call terminating message to the first terminal device, where
the sending the call to the third terminal device includes:
   sending an incoming call message to the third terminal device;
   receiving an answer message from the third terminal device, where the answer message indicates that a type of the call is voice call or video call;
   performing media negotiation with the network side based on an audio or video codec type supported by the third terminal device and the type of the call;
   sending a negotiation notification message to the third terminal device, where the negotiation notification message includes a result of the media negotiation; and
   sending a media data packet from the network side to the third terminal device and/or sending the media data packet from the third terminal device to the network side.

According to this embodiment of this application, when a plurality of terminal devices are registered and online, in a call process, a user may freely switch between the plurality of terminal devices and may further change the type of the call while switching between the terminal devices.

In some embodiments, the registration request message or the answer message received from the third terminal device includes the audio and/or video codec type supported by the third terminal device.

In some embodiments, the answer message received from the third terminal device further includes an address of the third terminal device for receiving and/or sending the media data packet.

In some embodiments, in the call originating flow, the initiating, by the customer premises equipment, the call to the network side further includes, in the wireless communication mode:
receiving a call handover message from the first terminal device;
determining whether there is a terminal device recorded as being in an online state in addition to the first terminal device; and
when determining that there is no terminal device recorded as being in the online state in addition to the first terminal device, sending a handover failure message to the first terminal device; or
when determining that there is a third terminal device recorded as being in the online state in addition to the first terminal device, sending the call to the third terminal device and sending a call terminating message to the first terminal device, where
the sending the call to the third terminal device includes:
   sending an incoming call message to the third terminal device;
   receiving an answer message from the third terminal device, where the answer message indicates that a type of the call is voice call or video call;
   performing media negotiation with the network side based on an audio or video codec type supported by the third terminal device and the type of the call;
   sending a negotiation notification message to the third terminal device, where the negotiation notification message includes a result of the media negotiation; and
   sending a media data packet from the network side to the third terminal device and/or sending the media data packet from the third terminal device to the network side.

According to this embodiment of this application, when a plurality of terminal devices are registered and online, in a call process, a user may freely switch between the plurality of terminal devices and may further change the type of the call while switching between the terminal devices.

In some embodiments, the registration request message or the answer message received from the third terminal device includes the audio and/or video codec type supported by the third terminal device.

In some embodiments, the answer message received from the third terminal device further includes an address of the third terminal device for receiving and/or sending the media data packet.

In some embodiments, the wireless communication mode is a Wi-Fi communication mode.

In some embodiments, an identifier of the customer premises equipment is a user identifier of the customer premises equipment or a device identifier of the customer premises equipment.

A second aspect of this application provides a communication method for use in a terminal device. The method includes:
establishing a connection to a customer premises equipment in a wireless communication mode, and implementing a call between the customer premises equipment and a network side for the customer premises equipment, where
the call includes a call originating flow and a call terminating flow,
in the call terminating flow, the implementing a call between the customer premises equipment and a network side includes: receiving, by the terminal device from the customer premises equipment in a wireless communication mode, a call of the network side that is destined for the customer premises equipment; and
in the call originating flow, the implementing a call between the customer premises equipment and the network side includes: sending, by the terminal device in a wireless communication mode, a call setup message to the customer premises equipment, so that the customer premises equipment initiates a call to the network side.

According to embodiments of this application, since the customer premises equipment implements the call between the customer premises equipment and the network side on the terminal device in the wireless communication mode, a user can move freely within coverage of a wireless communication network between the customer premises equipment and the terminal device, which optimizes user experience.

In some embodiments, the method further includes, before implementing, by the terminal device, the call for the customer premises equipment, in the wireless communication mode:
sending a registration request message to the customer premises equipment; and
receiving a registration success message from the customer premises equipment.

According to this embodiment of this application, the customer premises equipment may learn about a registered terminal device through a registration process. In this way, when the customer premises equipment receives, as a called party, a call from the network side, the customer premises equipment may send the call to the terminal device recorded as being in the online state. In addition, the terminal device that receives the registration success message may display its online state, so that the user may send a call setup message to the customer premises equipment through the terminal device, so that the customer premises equipment initiates a call to the network side 11.

In some embodiments, in the call terminating flow, the receiving, by the terminal device from the customer premises equipment, a call of the network side that is destined for the customer premises equipment includes:
receiving an incoming call message from the customer premises equipment;
sending an answer message to the customer premises equipment, where the answer message indicates that a type of the call is voice call or video call;
receiving a negotiation result message from the customer premises equipment, where the negotiation result message includes a result of media negotiation performed between the customer premises equipment and the network side based on an audio or video codec type supported by the terminal equipment and the type of the call; and
receiving a media data packet from the customer premises equipment and/or sending a media data packet to the customer premises equipment.

According to this embodiment of this application, the customer premises equipment and the terminal device perform incoming call indication and answer actions based on messages sent through wireless connections. The answer message sent by the terminal device indicates the type of the call. The customer premises equipment may perform media negotiation with the network side based on the audio and/or video codec type supported by the terminal device. The terminal device may support codecs such as high-definition voice EVS-WB, EVS-SWB, and EVS-FB. In addition, when the terminal device further supports video calls, video communication may be negotiated as a communication mode, and video formats such as low definition, standard definition, and high definition are supported.

In some embodiments, the registration request message or the answer message includes the audio and/or video codec type supported by the terminal device.

In some embodiments, the answer message further includes an address of the terminal device for receiving and/or sending the media data packet; and
the negotiation result message includes an address of the customer premises equipment for receiving and/or sending the media data packet.

In some embodiments, in the call originating flow, the call setup message indicates that a type of the call is voice call or video call and indicates an identifier of a called user, and the method further includes:
receiving a ringback tone message from the customer premises equipment and playing a ringback tone in response to the ringback tone message;
receiving a negotiation result message from the customer premises equipment, where the negotiation result message includes a result of media negotiation performed between the customer premises equipment and the network side based on an audio or video codec type supported by the terminal equipment and the type of the call; and
sending a media data packet to the customer premises equipment, and/or receiving the media data packet from the customer premises equipment.

According to this embodiment of this application, the call setup message sent by the terminal device indicates the type of the call. The customer premises equipment may perform media negotiation with the network side based on the audio and/or video codec type supported by the terminal device. The terminal device may support codecs such as high-definition voice EVS-WB, EVS-SWB, and EVS-FB. In addition, when the terminal device further supports video calls, video communication may be negotiated as a communication mode, and video formats such as low definition, standard definition, and high definition are supported.

In some embodiments, the registration request message or the call setup message includes the audio and/or video codec type supported by the terminal device.

In some embodiments, the call setup message includes an address of the terminal device for receiving and/or sending the media data packet; and
the negotiation notification message includes an address of the customer premises equipment for receiving and/or sending the media data packet.

In some embodiments, in the call terminating flow, the receiving, by the terminal device from the customer premises equipment, a call of the network side that is destined for the customer premises equipment further includes:
sending a call handover message to the customer premises equipment; and
receiving a handover failure message from the customer premises equipment, or receiving a call terminating message from the customer premises equipment.

According to this embodiment of this application, when a plurality of terminal devices are registered and online, in a call process, a user may freely switch between the plurality of terminal devices and may further change the type of the call while switching between the terminal devices.

In some embodiments, the call originating flow further includes:
sending, by the terminal device, a call handover message to the customer premises equipment; and
receiving, by the terminal device, a handover failure message from the customer premises equipment, or receiving a call terminating message from the customer premises equipment.

According to this embodiment of this application, when a plurality of terminal devices are registered and online, in a call process, a user may freely switch between the plurality of terminal devices and may further change the type of the call while switching between the terminal devices.

In some embodiments, the wireless communication mode is a Wi-Fi communication mode.

A third aspect of this application provides a machine-readable medium, where the medium stores instructions, and when the instructions run on a machine, the machine is enabled to perform any one of the foregoing communication methods.

A fourth aspect of this application provides a system, where the system includes a customer premises equipment and a terminal device. The customer premises equipment is configured to perform the foregoing communication method related to the customer premises equipment, and the terminal device is configured to perform the foregoing communication method related to the terminal device.

### BRIEF DESCRIPTION OF DRAWINGS

FIG. 1 is a schematic diagram of a structure of a communications system 10 according to an embodiment of this application;
FIG. 2 is a schematic diagram of structures of a customer premises equipment 12 and a terminal device 13 according to an embodiment of the present invention;
FIG. 3 is a schematic diagram of a structure and transmission protocols of control-plane signaling between a customer premises equipment 12 and a terminal device 13 according to an embodiment of the present invention;
FIG. 4 is a schematic diagram of transmission protocols of media-plane data between a customer premises equipment 12 and a terminal device 13 according to an embodiment of the present invention;
FIG. 5A and FIG. 5B are schematic flowcharts of a registration process 500 according to an embodiment of this application;
FIG. 6 is a schematic flowchart of a call originating flow 600 according to an embodiment of this application;
FIG. 7A and FIG. 7B are schematic flowcharts of a call terminating flow 700 according to an embodiment of this application;
FIG. 8A and FIG. 8B are schematic flowcharts of a handover process 800 according to an embodiment of this application; and
FIG. 9 is a schematic diagram of a structure of an electronic device 900 according to an embodiment of this application.

### DESCRIPTION OF EMBODIMENTS

Unless otherwise specified, "/" means "or". For example, A/B may represent A or B. The term "and/or" in this specification describes only an association relationship for describing associated objects and represents that three relationships may exist. For example, A and/or B may represent the following three cases: Only A exists, both A and B exist, and only B exists.

It should be understood that although terms such as "first" and "second" may be used herein to describe units or data, these units or data should not be limited by these terms. These terms are merely used to distinguish one feature from another feature. For example, without departing from the scope of the example embodiments, a first feature may be referred to as a second feature, and similarly the second feature may be referred to as the first feature.

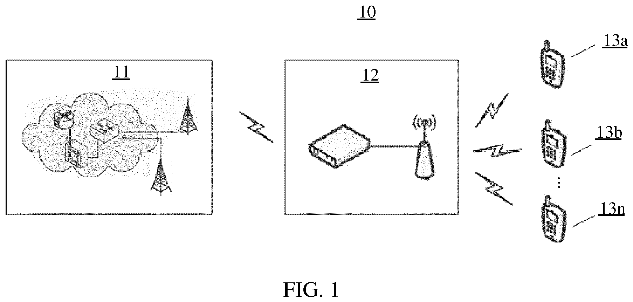

FIG. 1 is a schematic diagram of a structure of a communications system 10 according to an embodiment of this application. As shown in the figure, the communications system 10 includes a network side 11, a customer premises equipment 12, and one or more terminal devices 13a to 13n (collectively referred to as the terminal device 13 in this application). The network side 11 may include, but is not limited to, a radio access network, a core network, and a public data network in a cellular mobile communication network. The cellular mobile communication network may include, but is not limited to, a third-generation mobile communication network, a fourth-generation mobile communication network, and a fifth-generation mobile communication network.

The customer premises equipment 12 is connected to the network side 11 through an air interface of the cellular mobile communication network, and is connected to the terminal device 13 in a wireless communication mode. The wireless communication mode may be Wi-Fi communication. That is, the customer premises equipment 12 converts a received cellular mobile communication network signal into a Wi-Fi signal, so that the terminal device 13 may be connected to the customer premises equipment 12 through Wi-Fi communication. The wireless communication mode may also be Bluetooth communication, ZigBee communication, or another wireless communication mode.

According to some other embodiments of this application, the customer premises equipment 12 may also be connected to the terminal device 13 in a wired communication mode. For example, but not limited, the customer premises equipment 12 is connected to the terminal device 13 through a LAN (Local Area Network) port and a network cable (for example, but not limited, a twisted pair, an optical cable, or a coaxial cable), and communicates with the terminal device 13 based on a local area network protocol (for example, but not limited, the IEEE 802.3 protocol and the TCP/IP protocol).

According to some other embodiments of this application, the customer premises equipment 12 may also be connected to one or more terminal devices 13 in both the wireless communication mode and the wired communication mode.

The terminal device 13 may include, but is not limited to, a portable or mobile device, a mobile phone, a tablet computer, a television, a personal digital assistant, a laptop device, a desktop computer, a handheld PC, a server, a network device, a graphics device, a video game device, a set-top box, a cellular phone, a portable media player, a handheld device, a wearable device (for example, display glasses or goggles, a head-mounted display, a watch, a head-mounted device, an armband, jewelry, or the like), a virtual reality device and/or an augmented reality device, an Internet of Things device, an industrial control device, an automotive infotainment device, a streaming media client device, an ebook reading device, a POS terminal, or another electronic device capable of wireless communication and/or wired communication.

According to some embodiments of this application, the customer premises equipment 12 may establish a call connection to the network side 11, and may implement a call on the terminal device 13 in a wireless communication mode and/or a wired communication mode. The call includes a call terminating flow and a call originating flow. According to some embodiments of this application, in the call terminating flow, the customer premises equipment 12 may receive a call destined for the customer premises equipment 12 from the network side 11, and may send the call to the terminal device 13 in a wireless communication mode and/or a wired communication mode. According to some embodiments of this application, in the call originating flow, the customer premises equipment 12 may receive a call setup message from the terminal device 13 in a wireless communication mode and/or a wired communication mode, and initiate a call to the network side 11.

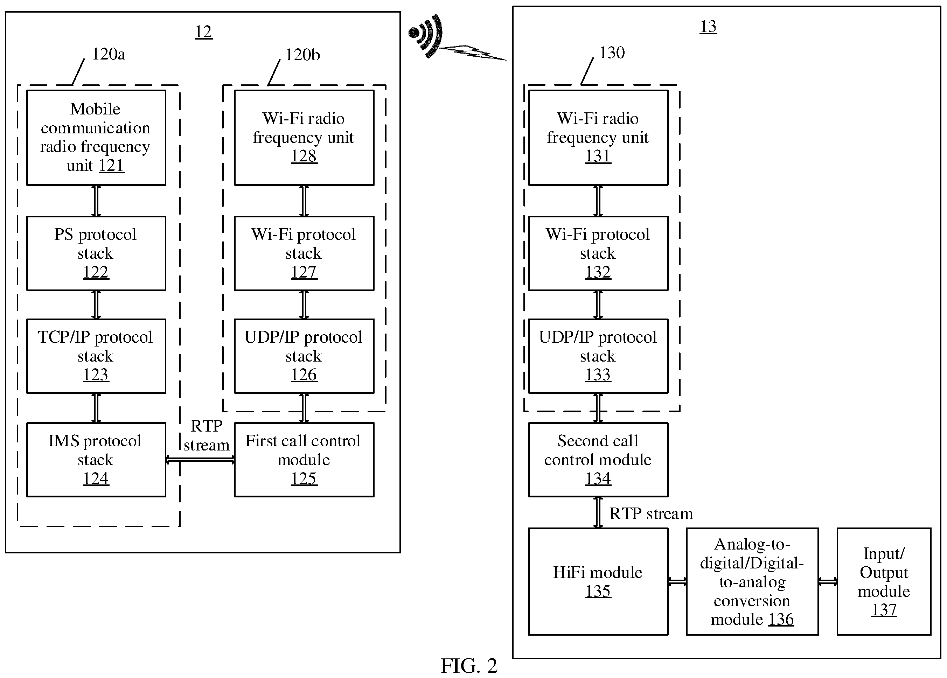

FIG. 2 is a schematic diagram of structures of a customer premises equipment 12 and a terminal device 13 according to an embodiment of this application. As shown in FIG. 2, the customer premises equipment 12 may include a first wireless transceiver module 120a, a second wireless transceiver module 120b, and a first call control module 125. The first wireless transceiver module may include a mobile communication radio frequency unit 121, a PS (Packet Switch, Packet Switch) protocol stack 122, a TCP/IP (Transmission Control Protocol/Internet Protocol, a Transmission Control Protocol/Internet Protocol) protocol stack 123, and an IMS (IP Multimedia Subsystem, IP Multimedia Subsystem) protocol stack 124. The second wireless transceiver module may include a UDP/IP (User Datagram Protocol/Internet Protocol, User Datagram Protocol/Internet Protocol) protocol stack 126, a Wi-Fi protocol stack 127, and a Wi-Fi radio frequency unit 128. Each module of the customer premises equipment 12 may include an application-specific integrated circuit (Application Specific Integrated Circuit, ASIC), a field programmable gate array (Field Programmable Gate Array, FPGA), an electronic circuit, a (shared, dedicated, or group) processor and/or a memory for executing one or more software or firmware programs, a combinational logic circuit, and/or another appropriate component that provides the described function.

It should be noted that structures of the first wireless transceiver module and the second wireless transceiver module are not limited to those shown in FIG. 2, and the first wireless transceiver module and the second wireless transceiver module may include any suitable quantity and any suitable type of protocol stacks. For example, in the second wireless transceiver module, a Bluetooth protocol stack may be used to substitute for the Wi-Fi protocol stack 127. In addition, the first wireless transceiver module and the second wireless transceiver module may also include other units, for example, but not limited, a baseband processing unit. When the customer premises equipment 12 is connected to the terminal device 13 in a wired communication mode, the customer premises equipment 12 may also include a wired transceiver module.

The first wireless transceiver module may implement wireless communication between the customer premises equipment 12 and the network side 11. In the first radio transceiver module, the mobile communication radio frequency unit 121 may receive and/or transmit a radio frequency signal by using an antenna feeder, where the radio frequency signal is used for cellular mobile communication. The PS protocol stack 122, the TCP/IP protocol stack 123, and the IMS protocol stack 124 may respectively perform PS protocol-based, TCP/IP protocol-based, and IMS protocol-based encapsulation for data to be transmitted to the network side 11, and alternatively may respectively perform PS protocol-based, TCP/IP protocol-based, and IMS protocol-based decapsulation for data from the network side 11. After the IMS protocol stack 124 decapsulates the data from the network side 11, an RTP (Real-time Transport Protocol, Real-time Transport Protocol) stream may be obtained. Alternatively, the IMS protocol stack 124 may perform IMS protocol-based encapsulation for the RTP stream, where the RTP stream may include media data, for example, but not limited, EVS -encoded audio data.

The second wireless transceiver module may implement wireless communication between the customer premises equipment 12 and the terminal device 13. In the second wireless transceiver module, the UDP/IP protocol stack 126 and the Wi-Fi protocol stack 127 may respectively perform UDP/IP protocol-based and Wi-Fi protocol-based encapsulation for data to be transmitted to the terminal device 13, and alternatively may respectively perform UDP/IP protocol-based and Wi-Fi protocol-based decapsulation for data from the terminal device 13. The Wi-Fi radio frequency unit 128 may receive and/or transmit a radio frequency signal by using an antenna feeder, where the radio frequency signal is used for Wi-Fi communication.

In the call originating flow and the call terminating flow, the first call control module 125 may respectively use the first wireless transceiver module and the second wireless transceiver module to exchange control-plane signaling used for call control and media-plane data (audio data and/or video data) generated in a call process with the network side 11 and the terminal device 13. According to some embodiments of this application, in a registration process, the first call control module 125 may further use the second wireless transceiver module to exchange control-plane signaling used for registration control with the terminal device 13. The successfully registered terminal device 13 may perform the call terminating flow and the call originating flow. According to some embodiments of this application, in a call handover process, the first call control module 125 may further use the second wireless transceiver module to exchange control-plane signaling used for call handover control and media-plane data (audio data and/or video data) generated in the call process with the network side 11 and different terminal devices 13.

As shown in FIG. 2, the terminal device 13 may include a third wireless transceiver module 130, a second call control module 134, a HiFi module 135, an analog-to-digital/digital-to-analog conversion module 136, and an input/output module 137. The third wireless transceiver module may further include a Wi-Fi radio frequency unit 131, a Wi-Fi protocol stack 132, and a UDP/IP protocol stack 133. Each module of the terminal device 13 may include an application-specific integrated circuit (Application Specific Integrated Circuit, ASIC), a field programmable gate array (Field Programmable Gate Array, FPGA), an electronic circuit, a (shared, dedicated, or group) processor and/or a memory for executing one or more software or firmware programs, a combinational logic circuit, and/or another appropriate component that provides the described function.

It should be noted that a structure of the third wireless transceiver module is not limited to that shown in FIG. 2, and the third wireless transceiver module may include any suitable quantity and any suitable type of protocol stacks. For example, in the third wireless transceiver module, a Bluetooth protocol stack may be used to substitute for the Wi-Fi protocol stack 132. In addition, the third wireless transceiver module may also include other units, for example, but not limited, a baseband processing unit. When the terminal device 13 is connected to the customer premises equipment 12 in a wired communication mode, the terminal device 13 may also include a wired transceiver module.

The third wireless transceiver module may implement wireless communication between the terminal device 13 and the customer premises equipment 12. In the third wireless transceiver module, the Wi-Fi radio frequency unit 131 may receive and/or transmit a radio frequency signal by using an antenna feeder, where the radio frequency signal is used for Wi-Fi communication. The Wi-Fi protocol stack 132 and the UDP/IP protocol stack 133 may respectively perform Wi-Fi protocol-based and UDP/IP protocol-based encapsulation for data to be transmitted to the customer premises equipment 12, and alternatively may respectively perform Wi-Fi protocol-based and UDP/IP protocol-based decapsulation for data from the customer premises equipment 12.

In the call originating flow and the call terminating flow, the second call control module 134 may use the third wireless transceiver module to exchange control-plane signaling used for call control and media-plane data (audio data and/or video data) generated in a call process with the customer premises equipment 12. According to some embodiments of this application, in a registration process, the second call control module 134 may further use the third wireless transceiver module to exchange control-plane signaling used for registration control with the customer premises equipment 12. The successfully registered terminal device 13 may perform the call terminating flow and the call originating flow.

The HiFi module 135 may decode media data in an RTP stream to obtain a PCM (Pulse Code Modulation, Pulse Code Modulation) stream. For example, the HiFi module 135 may perform EVS decoding on EVS-encoded audio data in the RTP stream.

The analog-to-digital/digital-to-analog conversion module 136 may convert an analog signal from the input/output module 137 into a digital signal, or may convert a digital signal from the HiFi module 135 into an analog signal.

The input/output module 137 may receive audio input, image input, and the like, or may output audio, an image, and the like. Examples of the input/output module 137 may include, but are not limited to, a loudspeaker, a microphone, and a display (for example, a liquid crystal display, a touchscreen display, or the like).

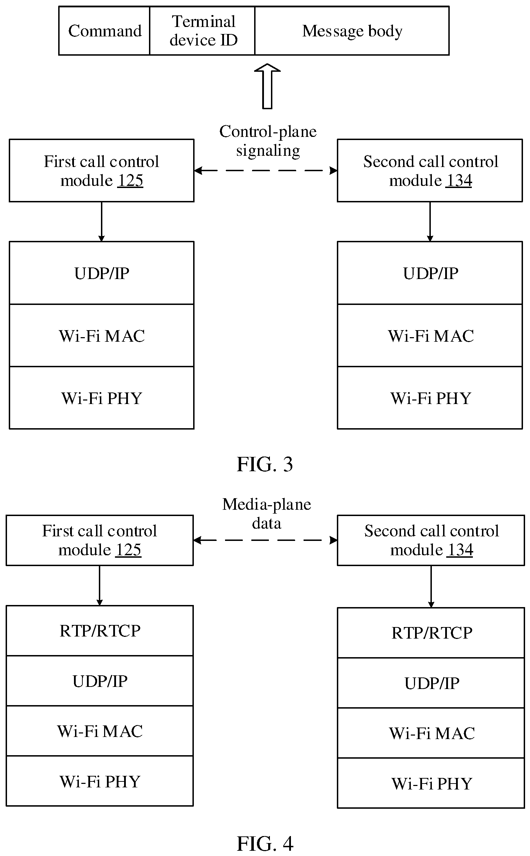

FIG. 3 shows a structure and transmission protocols of control-plane signaling between the first call control module 125 and the second call control module 134 in FIG. 2. As shown in FIG. 3, the control-plane signaling between the first call control module 125 and the second call control module 134 may include a command part, a terminal device ID (Identity, identity) part, and a message body part. The command part is used to indicate a signaling type, and may include but is not limited to a 1 -byte hexadecimal character string. The terminal device ID part is used to indicate an identifier of a terminal device 13 (for example, but not limited, a MAC (Media Access Control, media access control layer) address of the terminal device 13), and may include, but is not limited to, a 6-byte character string. The message body part is used to indicate specific content of the signaling, for example, but not limited, a call type (voice call or video call), a codec type, an address for receiving and/or transmitting a media data packet (for example, but not limited, an IP address and a port number related to a media transmission protocol), and the like. It should be noted that the structure of the control-plane signaling is not limited to that shown in FIG. 3.

As shown in FIG. 3, the control-plane signaling is transmitted between the first call control module 125 and the second call control module 134 based on the UDP/IP protocol and the Wi-Fi protocol, where the Wi-Fi protocol includes the Wi-Fi MAC protocol and the Wi-Fi PHY (Physical, physical layer) protocol. It should be noted that the transmission protocols of the control-plane signaling are not limited to those shown in FIG. 3.

FIG. 4 shows transmission protocols of media-plane data between the first call control module 125 and the second call control module 134. As shown in FIG. 4, the media-plane data is transmitted between the first call control module 125 and the second call control module 134 based on the RTP/RTCP (Real-time Transport Control Protocol, Real-time Transport Control Protocol) protocol, the UDP/IP protocol, and the Wi-Fi protocol, where the Wi-Fi protocol includes the Wi-Fi MAC protocol and the Wi-Fi PHY protocol. It should be noted that the transmission protocols of the media-plane data are not limited to those shown in FIG. 3.

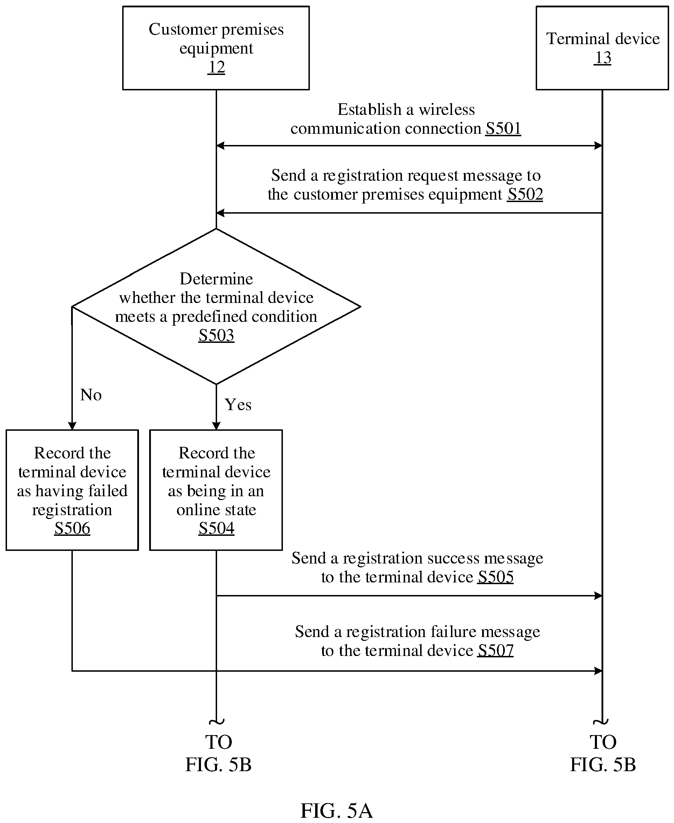

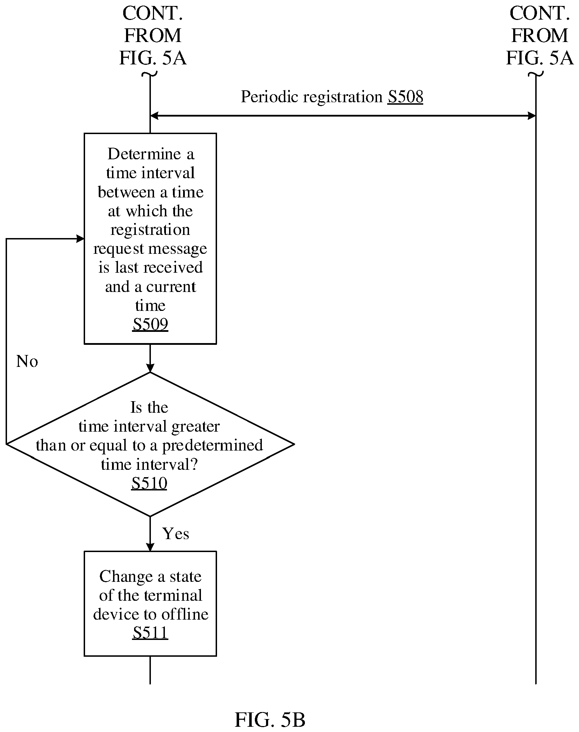

To implement a call on the terminal device 13, a registration process needs to be first performed between the customer premises equipment 12 and the terminal device 13. FIG. 5 is a schematic flowchart of a registration process 500 between the customer premises equipment 12 and the terminal device 13. It should be noted that, although in this embodiment of this application, steps of a method are presented in a specific sequence, the sequence of the steps may be changed in different embodiments, and in some embodiments, one or more steps shown in the sequence in this specification may be performed simultaneously.

As shown in FIG. 5A and FIG. 5B, the registration method 500 includes the following steps.

S501. Establish a wireless communication connection between a customer premises equipment 12 and a terminal device 13.

In an example, one of a Wi-Fi communication connection, a Bluetooth communication connection, a ZigBee communication connection, and another wireless communication connection may be established between the customer premises equipment 12 and the terminal device 13.

In another example, a wired communication connection may also be established between the customer premises equipment 12 and the terminal device 13.

S502. The terminal device 13 sends a registration request message to the customer premises equipment 12.

In an example, the registration request message may include an audio and/or video codec type supported by the terminal device 13. The audio codec type supported by the terminal device 13 may include, but is not limited to, EVS (Enhanced Voice Service, Enhanced Voice Service), AMR (Adaptive multi-Rate, adaptive multi-rate), AMR-WB (Adaptive multi-Rate Wide Band, adaptive multi-rate wideband), and ITU-T G.711 codec. The video codec type supported by the terminal device 13 may include, but is not limited to, H.264, MPEG-2, MPEG-4, WMA-HD, and VC-1 codec.

In an example, a user opens an intelligent terminal app on the terminal device 13, so that the terminal device 13 sends the registration request message to the customer premises equipment 12, where the intelligent terminal app may include a second call control module 134.

In another example, after the wireless communication connection is established between the customer premises equipment 12 and the terminal device 13, the terminal device 13 automatically sends the registration request message to the customer premises equipment 12.

S503. The customer premises equipment 12 determines whether the terminal device 13 meets a predefined condition. If the terminal device 13 meets the predefined condition, perform S504 and S505; or if the terminal device 13 does not meet the predefined condition, perform S506 and S507.

In an example, the predefined condition may include, but is not limited to, one or more of the following: An identifier of the terminal device 13 is in a preset whitelist, the terminal device 13 supports a specific audio and/or video codec type, and the like.

S504. The customer premises equipment 12 records the terminal device 13 as being in an online state, and if the customer premises equipment 12 receives a call destined for the customer premises equipment 12 from a network side 11, the customer premises equipment 12 may send the call to the terminal device 13 recorded as being in the online state.

When the registration request message includes the audio and/or video codec type supported by the terminal device 13, the customer premises equipment 12 may further record the audio and/or video codec type of the terminal device 13.

S505. The customer premises equipment 12 sends a registration success message to the terminal device 13, where the registration success message is used to indicate that the terminal device 13 is registered successfully.

The terminal device 13 that receives the registration success message may display its online state, and may send a call setup message to the customer premises equipment 12, so that the customer premises equipment 12 initiates a call to the network side 11.

S506. The customer premises equipment 12 records the terminal device 13 as having failed registration, and if the customer premises equipment 12 receives a call destined for the customer premises equipment 12 from the network side 11, the customer premises equipment 12 does not send the call to the terminal device 13 recorded as having failed registration.

S507. The customer premises equipment 12 sends a registration failure message to the terminal device 13, where the registration failure message is used to indicate that the terminal device 13 has failed the registration.

The terminal device 13 that receives the registration failure message does not send the call setup message to the customer premises equipment 12, or the terminal device 13 may send the call setup message to the customer premises equipment 12, but the customer premises equipment 12 does not initiate a call to the network side 11.

S508. The terminal device 13 that receives the registration success message in the registration through S502 to S507 continues to perform periodic registration with the customer premises equipment 12. In this way, the customer premises equipment 12 can perceive an online state of the terminal device 13 in real time within a period of time. S502 to S507 are performed for each registration.

The period of time may be, but is not limited to, a period of time during which the wireless communication connection is established between the terminal device 13 and the customer premises equipment 12 and the terminal device 13 enables a function of implementing a call between the customer premises equipment 12 and the network side 11 (for example, but not limited, starting an intelligent terminal app), or a period of time during which the wireless communication connection is established between the terminal device 13 and the customer premises equipment 12.

In another example, since the terminal device 13 has sent the supported audio and/or video codec type to the customer premises equipment 12 during the initial registration in S502 to S507, during the periodic registration (that is, non-initial registration) in S508, the registration request message may not include the audio and/or video codec type supported by the terminal device 13.

It should be noted that periodic registration may also continue to be performed between the terminal device 13 that receives the registration failure message during the registration in S502 to S507 and the customer premises equipment 12. S502 to S507 are performed for each registration.

S509. For the terminal device 13 recorded as being in the online state, the customer premises equipment 12 determines a time interval between a time at which the registration request message is last received from the terminal device 13 and a current time.

S510. The customer premises equipment 12 determines whether the time interval is greater than or equal to a predetermined time interval. If yes, proceed with S511; if no, go back to perform S509.

Examples of the predetermined time interval may include, but are not limited to, 10 seconds, 1 minute, 5 minutes, 10 minutes, or another length of time interval.

S511. The customer premises equipment 12 changes the state of the terminal device 13 to an offline state, and if the customer premises equipment 12 receives a call destined for the customer premises equipment 12 from the network side 11, the customer premises equipment 12 does not send the call to the terminal device 13 recorded as being in the offline state.

Table 1 shows an example of control-plane signaling between the customer premises equipment 12 and the terminal device 13 involved in the registration process. As shown in Table 1, a command part of a registration request message for initial registration within a period of time may include a character string with a value of "0x01", a terminal device ID part may include a MAC address of the terminal device 13, and a message body part may include the audio and/or video codec type supported by the terminal device 13. For example, the supported audio codec type may include EVS, AMR, AMR-WB, and G.711, and the supported video codec type may include H.264, MPEG-2, MPEG-4, WMA-HD and VC-1. A command part of a registration request message for non-initial registration within a period of time may include a character string with a value of "0x02", a terminal device ID part may include the MAC address of the terminal device 13, and a message body part may be empty. A command part of a registration success message may include a character string with a value of "0x10", a terminal device ID part may include the MAC address of the terminal device 13, and a message body part may be empty. A command part of a registration failure message may include a character string with a value of "0x20", a terminal device ID part may include the MAC address of the terminal device 13, and a message body part may be empty.

It should be noted that a structure and content of the control-plane signaling involved in the registration process are not limited to those shown in Table 1.

**Table 1 Control-plane signaling between a customer premises equipment and a terminal device involved in a registration process**

| Command | Terminal device ID | Message body | Message description |
|---|---|---|---|
| 0x01 | MAC address of the terminal device | Audio: EVS, AMR, AMR-WB, and G.711 | Registration request message for initial registration in a period of time |
| | | Video: H.264, MPEG-2, MPEG-4, WMA-HD and VC-1 | |
| 0x10 | MAC address of the terminal device | | Registration success message |
| 0x20 | MAC address of the terminal device | | Registration failure message |
| 0x02 | MAC address of the terminal device | | Registration request message for non-initial registration in a period of time |

In a conventional technology, a customer premises equipment is connected to an analog phone through an RJ11 port, where an SLIC (Subscriber Line Interface Circuit, subscriber line interface circuit) of the customer premises equipment determines whether the analog phone is online based on a voltage and current. However, in this embodiment of this application, the customer premises equipment 12 learns about the connected terminal device 13 through the registration process, and records the terminal device 13 that is in the online state and the audio and/or video codec type supported by the terminal device 13 in the online state. In this way, when receiving a call from the network side 11 as a called party, the customer premises equipment 12 may send the call to the terminal device 13 recorded as being in the online state.

In this embodiment of this application, the terminal device 13 that receives the registration success message may display its online state, so that the user may send a call setup message to the customer premises equipment 12 through the terminal device 13, so that the customer premises equipment 12 initiates a call to the network side 11.

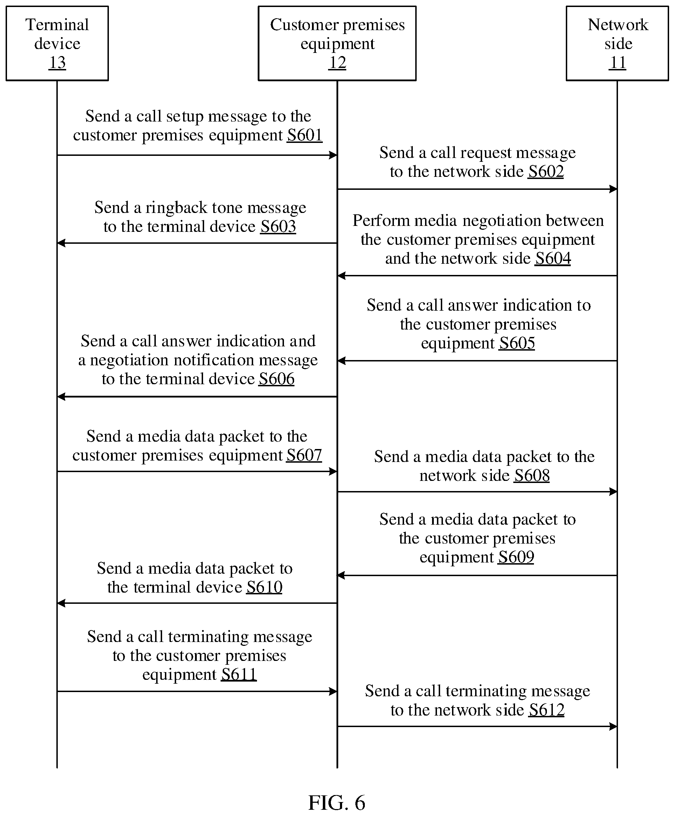

FIG. 6 is a schematic flowchart of a call originating flow 600 between a customer premises equipment 12 and a terminal device 13. It should be noted that, although in this embodiment of this application, steps of a method are presented in a specific sequence, the sequence of the steps may be changed in different embodiments, and in some embodiments, one or more steps shown in the sequence in this specification may be performed simultaneously.

As shown in FIG. 6, the call originating flow 600 includes the following steps.

S601. A terminal device 13 sends a call setup message to a customer premises equipment 12, where the call setup message may indicate the customer premises equipment 12 to initiate a call to a network side 11.

In an example, the call setup message may include a call type (voice call or video call) and an identifier of a called party. The identifier of the called party may include, but is not limited to, an IMSI (International Mobile Subscriber Identity, international mobile subscriber identity), a TMSI (Temporary Mobile Subscriber Identity, temporary mobile subscriber identity), an MSISDN (Mobile Subscriber International ISDN/PSTN Number), an IMEI (International Mobile Equipment Identity, international mobile equipment identity), an MSIN (Mobile Subscriber Identification Number, mobile subscriber identification number), and the like.

In addition, the call setup message may further include an address of the terminal device 13 for receiving and/or sending a media data packet, for example, an IP address or a port number related to a transmission protocol of the media data packet.

When the call type is video call, the call setup message may further include a video resolution, for example, a low definition (for example, but not limited, a resolution of 640×480), a standard definition (for example, but not limited, a resolution of 960×720), and a high definition (for example, but not limited, a resolution of 1440×1080).

In another example, when a registration request message does not include an audio and/or the video codec type supported by the terminal device 13, if the call type is voice call, the call setup message may further include an audio codec type supported by the terminal device 13; or if the call type is video call, the call setup message may further include a video codec type supported by the terminal device 13; or the call setup message may further include an audio codec type and a video codec type that are supported by the terminal device 13. For example, the call setup message may indicate that the call type is voice call, and that the audio codec type supported by the terminal device 13 is EVS-NB codec.

S602. The customer premises equipment 12 sends a call request message to a network side 11.

In an example, the call request message may include the call type, the identifier of the called party, and the audio or video codec type supported by the terminal device 13.

When the call type is video call, the call request message may further include a video resolution.

S603. The customer premises equipment 12 sends a ringback tone message to the terminal device 13, where the ringback tone message may indicate to the terminal device 13 that the customer premises equipment 12 is dialing.

In an example, the ringback tone message may include a ringback tone, and the terminal device 13 plays the ringback tone in the ringback tone message after receiving the ringback tone message.

In another example, the ringback tone message may include an indication that indicates the terminal device 13 to play a ringback tone. After receiving the ringback tone message, the terminal device 13 plays a ringback tone stored by the terminal device 13.

S604. Perform media negotiation between the customer premises equipment 12 and the network side 11.

In an example, the customer premises equipment 12 and the network side 11 may determine a final call type. The final call type may be a call type selected by both the terminal device 13 and the called party, or when the terminal device 13 and the called party select different call types, a call type with a high priority may be used as the final call type based on preset priorities of voice call and video call.

In addition, the customer premises equipment 12 and the network side 11 may further determine a final audio or video codec type. The final audio or video codec type may be an audio or video codec type supported by both the terminal device 13 and the called party. If there are a plurality of audio or video codec types supported by both the terminal device 13 and the called party, an audio or video codec type may be determined as the final audio or video codec type based on preset priorities of the audio or video codec types.

When the call type is video call, the customer premises equipment 12 and the network side 11 may further determine a final video resolution of the video call. The final video resolution may be a video resolution selected by both the terminal device 13 and the called party, or when the terminal device 13 and the called party select different video resolutions, a lower video resolution in the video resolutions selected by the terminal device 13 and the called party may be used as the final video resolution, or a video resolution having the highest priority may be used as the final video resolution based on preset priorities of the video resolutions.

S605. The network side 11 sends a call answer indication to the customer premises equipment 12.

S606. The customer premises equipment 12 sends the call answer indication and a negotiation notification message to the terminal device 13, where the negotiation notification message includes a media negotiation result.

In an example, the media negotiation result may include the final call type and the final audio or video codec type. When the call type is video call, the media negotiation result may further include the final video resolution. For example, the final call type included in the media negotiation result may be voice call, and the final audio codec type may be EVS-NB codec.

In addition, the negotiation notification message may further include an address of the customer premises equipment 12 for receiving and/or sending a media data packet, for example, an IP address or a port number related to a transmission protocol of the media data packet.

S607. The terminal device 13 sends a media data packet to the customer premises equipment 12.

In an example, the terminal device 13 may send the media data packet, for example, an EVS-NB encoded audio data packet, based on the media negotiation result and the address of the customer premises equipment 12 for receiving and/or sending the media data packet.

S608. The customer premises equipment 12 sends a media data packet from the terminal device 13 to the network side 11.

When sending the media data packet to the network side 11, the customer premises equipment 12 does not carry an ID of the terminal device 13.

S609. The network side 11 sends a media data packet, for example, an EVS-NB encoded audio data packet, from a called party to the customer premises equipment 12.

The media data packet from the called party is destined for the customer premises equipment 12 rather than the terminal device 13. That the media data packet is destined for the customer premises equipment 12 means that when sending the media data packet, the called party carries an identifier of the customer premises equipment 12, for example, but not limited, an IMSI (International Mobile Subscriber Identity, international mobile subscriber identity), a TMSI (Temporary Mobile Subscriber Identity, temporary mobile subscriber identity), an MSISDN (Mobile Subscriber International ISDN/PSTN Number), an IMEI (International Mobile Equipment Identity, international mobile equipment identity), an MSIN (Mobile Subscriber Identification Number, mobile subscriber identification number), and the like.

S610. The customer premises equipment 12 sends a media data packet from the called party to the terminal device 13.

The customer premises equipment 12 may send the media data packet based on the address of the terminal device 13 for receiving and/or sending the media data packet.

S611. The terminal device 13 sends a call terminating message to the customer premises equipment 12, where the call terminating message indicates that the call ends.

In another example, in S611, the network side 11 sends a call terminating message to the customer premises equipment 12.

S612. The customer premises equipment 12 sends a call terminating message to the network side 11.

In another example, in S612, the customer premises equipment 12 sends a call terminating message to the terminal device 13.

Table 2 shows an example of control-plane signaling between the customer premises equipment 12 and the terminal device 13 involved in the call originating flow. As shown in Table 2, a command part of the call setup message may include a character string with a value of "0x03", a terminal device ID part may include a MAC address of the terminal device 13, and a message body part may indicate that the call type selected by the terminal device 13 is voice call and indicate the IP address and port number that are of the terminal device 13 for receiving and/or sending the media data packet. A command part of the ringback tone message may include a character string with a value of "0x11 ", a terminal device ID part may include the MAC address of the terminal device 13, and a message body part may be empty. A command part of the negotiation notification message may include a character string with a value of "0x12", a terminal device ID part may include the MAC address of the terminal device 13, and a message body part may indicate that the final call type is voice call and the final audio codec type is EVS-NB, and indicate the IP address and port number that are of the customer premises equipment 12 for receiving and/or sending the media data packet. A command part of the call terminating message sent by the terminal device 13 may include a character string with a value of "0x04", a terminal device ID part may include a MAC address of the terminal device 13, and a message body part may be empty. A command part of the call terminating message sent by the customer premises equipment 12 may include a character string with a value of "0x14", a terminal device ID part may include the MAC address of the terminal device 13, and a message body part may be empty.

It should be noted that a structure and content of the control-plane signaling involved in the call originating flow are not limited to those shown in Table 2.

**Table 2 Control-plane signaling between a customer premises equipment and a terminal device involved in a call originating flow**

| Command | Terminal device ID | Message body | Message description |
|---|---|---|---|
| 0x03 | MAC address of the terminal device | Call type: voice call | Call setup message |
| | | IP address and port number for receiving and/or sending a media data packet | |
| 0x11 | MAC address of the terminal device | | Ringback tone message |
| 0x12 | MAC address of the terminal device | Final call type: voice call | Negotiation notification message |
| | | Final audio codec type: EVS-NB | |
| | | IP address and port number for receiving and/or sending a media data packet | |
| 0x04 | MAC address of the terminal device | | Call terminating message sent by the terminal device 13 |
| 0x14 | MAC address of the terminal device | | Call terminating message sent by the customer premises equipment 12 |

It should be noted that, according to some other embodiments of this application, after receiving the call setup message from the terminal device 13, the customer premises equipment 12 may first determine a registration state of the terminal device 13. If the terminal device 13 has failed registration, the customer premises equipment 12 does not send the call request message to the network side 11, and the call originating flow ends. If the terminal device 13 is registered successfully and is recorded as being in an online state, the customer premises equipment 12 sends the call request message to the network side 11, and performs the steps in the foregoing embodiment.

In this embodiment of this application, the terminal device 13 that is successfully registered and displayed online may send the call setup message to the customer premises equipment 12 at any time, so that the customer premises equipment 12 initiates a call to the network side. In addition, in a call process, the terminal device 13 may move freely within coverage of a wireless network.

In addition, in the prior art, an SLIC chip of the customer premises equipment judges an off-hook or on-hook state of an analog phone based on a voltage and current, and determines a dialed number based on a signal in an analog line. The SLIC chip provides a dial tone, a ringback tone, or the like for the analog phone. In addition, the analog line and the analog phone support only narrowband voice. Therefore, generally, only AMR-NB or EVS-NB can be negotiated as the codec type through media negotiation.

However, in this embodiment of this application, the customer premises equipment 12 and the terminal device 13 perform dialing and hang-up actions based on messages sent through wireless connections. The call setup message sent by the terminal device 13 indicates the type of the call. The customer premises equipment 12 may perform media negotiation with the network side based on the audio and/or video codec type supported by the terminal device 13. The terminal device 13 may support codecs such as high-definition voice EVS-WB, EVS-SWB, and EVS-FB. In addition, when the terminal device 13 further supports video calls, video communication may be negotiated as a communication mode, and video formats such as low definition, standard definition, and high definition are supported.

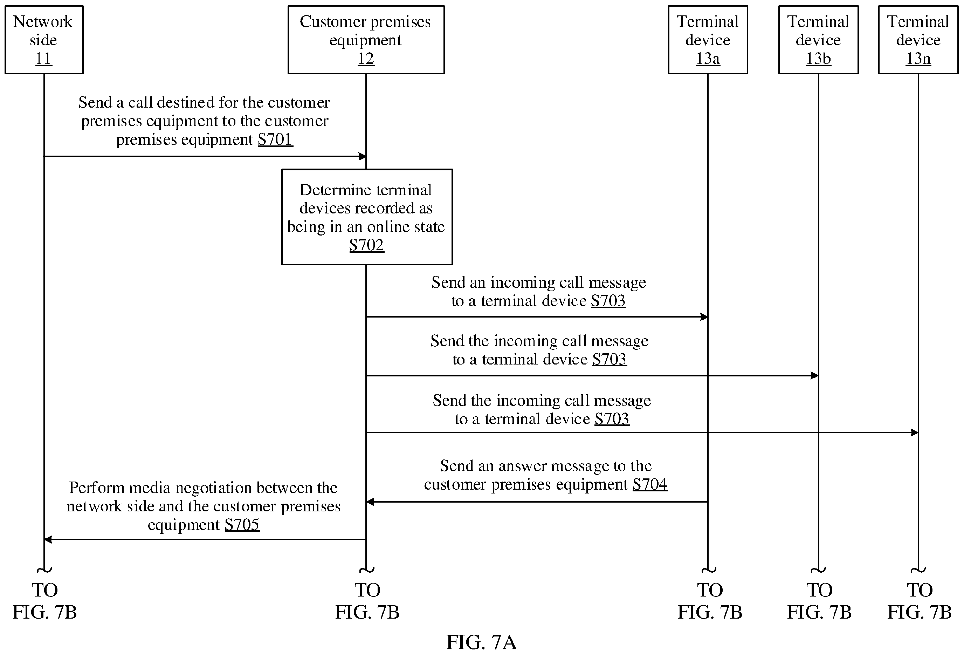

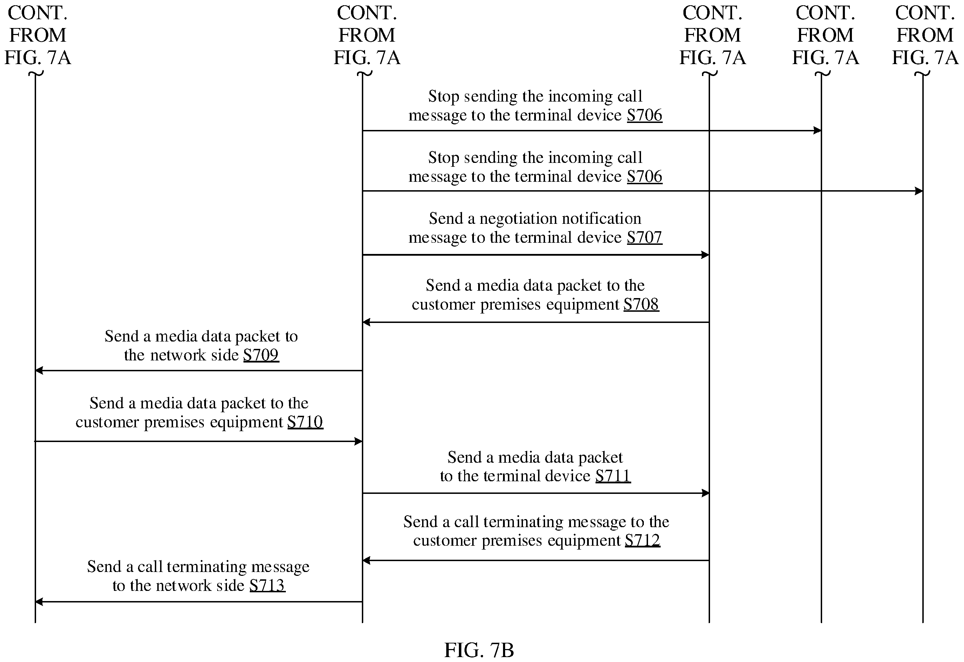

FIG. 7A and FIG. 7B are schematic flowcharts of a call terminating flow 700 between a customer premises equipment 12 and a terminal device 13. It should be noted that, although in this embodiment of this application, steps of a method are presented in a specific sequence, the sequence of the steps may be changed in different embodiments, and in some embodiments, one or more steps shown in the sequence in this specification may be performed simultaneously.

As shown in FIG. 7A and FIG. 7B, the call terminating flow 700 includes the following steps.

S701. A network side 11 sends a call destined for a customer premises equipment 12 to the customer premises equipment 12.

That the call is destined for the customer premises equipment 12 means that the call from the network side 11 includes an identifier of the customer premises equipment 12.

S702. The customer premises equipment 12 determines one or more terminal devices 13 recorded as being in an online state.

For example, but not limited, the customer premises equipment 12 may determine that terminal devices 13a, 13b, and 13n are recorded as being in the online state in a registration process.

S703. The customer premises equipment 12 sends an incoming call message to one or more terminal devices 13 (for example, terminal devices 13a, 13b, and 13n) recorded as being in the online state, where the incoming call message may indicate the terminal devices 13 to ring.

In some examples, the customer premises equipment 12 may simultaneously send the incoming call message to a plurality of terminal devices 13 recorded as being in the online state.

In some other examples, the customer premises equipment 12 may send the incoming call message to a plurality of terminal devices 13 recorded as being in the online state based on a predefined sequence (for example, based on preset priorities of the terminal devices 13). For example, the customer premises equipment 12 may first send the incoming call message to a terminal device 13 having the highest priority, and if the customer premises equipment 12 does not receive an answer message from the terminal device 13 within a predetermined period, for example, 15 seconds, the customer premises equipment 12 stops sending the incoming call message to the terminal device 13. The customer premises equipment 12 continues to send the incoming call message to a terminal device 13 having the second highest priority according to the same rule, until the customer premises equipment 12 receives an answer message from a terminal device 13.

S704. A terminal device 13 (for example, a terminal device 13a) that receives the incoming call message sends an answer message to the customer premises equipment 12.

In an example, the answer message may include a call type, and when the call type is video call, the answer message may further include a video resolution of the video call.

In addition, the answer message may further include an address of the terminal device 13 for receiving and/or sending a media data packet, for example, an IP address or a port number related to a transmission protocol.

In another example, when a registration request message does not include an audio and/or video codec type supported by the terminal device 13, if the call type is voice call, the answer message may further include an audio codec type supported by the terminal device 13; or if the call type is video call, the answer message may further include a video codec type supported by the terminal device 13; or the answer message may further include an audio codec type and a video codec type that are supported by the terminal device 13. For example, the answer message may indicate that the call type is voice call, and that the audio codec type supported by the terminal device 13 is EVS-WB codec.

S705. The customer premises equipment 12 performs media negotiation with a network side 11 for the terminal device 13 (for example, the terminal device 13a) described in S704.

In an example, the customer premises equipment 12 and the network side 11 may determine a final call type. The final call type may be a call type selected by both the terminal device 13 and a called party, or when call types selected by the terminal device 13 and the called party are different, a call type with a high priority may be used as the final call type based on preset priorities of voice call and video call.

In addition, the customer premises equipment 12 and the network side 11 may further determine a final audio or video codec type. The final audio or video codec type may be an audio or video codec type supported by both the terminal device 13 and the called party. If there are a plurality of audio or video codec types supported by both the terminal device 13 and the called party, an audio or video codec type may be determined as the final audio or video codec type based on preset priorities of the audio or video codec types.

When the call type is video call, the customer premises equipment 12 and the network side 11 may further determine a final video resolution of the video call. The final video resolution may be a video resolution selected by both the terminal device 13 and the called party, or when the terminal device 13 and the called party select different video resolutions, a lower video resolution in the video resolutions selected by the terminal device 13 and the called party may be used as the final video resolution, or a video resolution having the highest priority may be used as the final video resolution based on preset priorities of the video resolutions.

S706. The customer premises equipment 12 stops sending the incoming call message to other terminal devices 13 (for example, terminal devices 13b and 13n).

S707. The customer premises equipment 12 sends a negotiation notification message to the terminal device 13 (for example, the terminal device 13a) described in S704, where the negotiation notification message includes a media negotiation result.

In an example, the media negotiation result may include the final call type and the final audio or video codec type. When the call type is video call, the media negotiation result may further include the final video resolution. For example, the final call type included in the media negotiation result may be voice call, and the final audio codec type may be EVS-WB codec.

In addition, the negotiation notification message may further include an address of the customer premises equipment 12 for receiving and/or sending a media data packet, for example, an IP address or a port number related to a transmission protocol of the media data packet.

S708. The terminal device 13 (for example, the terminal device 13a) described in S704 sends a media data packet to the customer premises equipment 12.

In an example, the terminal device 13 may send the media data packet, for example, an EVS-WB encoded audio data packet, based on the media negotiation result and the address of the customer premises equipment 12 for receiving and/or sending the media data packet.

S709. The customer premises equipment 12 sends a media data packet from the terminal device 13 (for example, the terminal device 13a) described in S704 to the network side 11.

When sending the media data packet to the network side 11, the customer premises equipment 12 does not carry an ID of the terminal device 13.

S710. The network side 11 sends a media data packet, for example, an EVS-WB encoded audio data packet, from the called party to the customer premises equipment 12.

The media data packet from the called party is destined for the customer premises equipment 12 rather than the terminal device 13.

S711. The customer premises equipment 12 sends a media data packet from a called party to the terminal device 13 (for example, the terminal device 13a) described in S704.

The customer premises equipment 12 may send the media data packet based on the address of the terminal device 13 for receiving and/or sending the media data packet.

S712. The terminal device 13 (for example, the terminal device 13a) described in S704 sends a call terminating message to the customer premises equipment 12, where the call terminating message indicates that the call ends.

In another example, in S712, the network side 11 sends a call terminating message to the customer premises equipment 12.

S713. The customer premises equipment 12 sends a call terminating message to the network side 11.

In another example, in S713, the customer premises equipment 12 sends a call terminating message to the terminal device 13 described in S704.

Table 3 shows an example of control-plane signaling between the customer premises equipment 12 and the terminal device 13 involved in the call terminating flow. As shown in Table 3, a command part of the incoming call message may include a character string with a value of "0x13", a terminal device ID part may include a MAC address of the terminal device 13, for example, a MAC address of the terminal device 13a, 13b, or 13n, and a message body part may be empty. A command part of the answer message may include a character string with a value of "0x03", a terminal device ID part may include a MAC address of the terminal device 13, for example, a MAC address of the terminal device 13a, and a message body part may indicate that the call type selected by the terminal device 13a is voice call and indicate the IP address and port number that are of the terminal device 13a for receiving and/or sending the media data packet. A command part of the call terminating message sent by the customer premises equipment 12 may include a character string with a value of "0x14", a terminal device ID part may include a MAC address of the terminal device 13, for example, a MAC address of the terminal device 13a, 13b, or 13n, and a message body part may be empty. A command part of the negotiation notification message may include a character string with a value of "0x12", a terminal device ID part may include a MAC address of the terminal device 13, for example, a MAC address of the terminal device 13a, and a message body part may indicate that the final call type is voice call and the final audio codec type is EVS-WB, and indicate the IP address and port number that are of the customer premises equipment 12 for receiving and/or sending the media data packet. A command part the call terminating message sent by the terminal device 13 may include a character string with a value of "0x04", a terminal device ID part may include a MAC address of the terminal device 13, for example, a MAC address of the terminal device 13a, and a message body part may be empty.

It should be noted that a structure and content of the control-plane signaling involved in the call terminating flow are not limited to those shown in Table 3.

**Table 3 Control-plane signaling between a customer premises equipment and a terminal device involved in a call terminating flow**

| Command | Terminal device ID | Message body | Message description |
|---|---|---|---|
| 0x13 | MAC address of the terminal device 13 | | Incoming call message |
| 0x03 | MAC address of the terminal device 13a | Call type: voice call | Answer message |
| | | IP address and port number for receiving and/or sending a media data packet | |
| 0x14 | MAC address of the terminal device 13 | | Call terminating message sent by the customer premises equipment 12 |
| 0x12 | MAC address of the terminal device 13a | Final call type: voice call | Negotiation notification message |
| | | Final audio codec type: EVS-WB | |
| | | IP address and port number for receiving and/or sending a media data packet | |
| 0x04 | MAC address of the terminal device 13a | | Call terminating message sent by the terminal device 13a |

In the prior art, an SLIC chip of the customer premises equipment indicates, through user cable signaling, to an analog phone that there is a new incoming call. After answering the call, a user informs the customer premises equipment through user cable signaling. The analog line and the analog phone support only narrowband voice. Generally, only AMR-NB or EVS-NB can be negotiated as a codec type through media negotiation. In addition, one customer premises equipment generally has only one RJ11 interface and therefore, can be connected to only one analog phone, rather than answering calls by using a plurality of terminal devices.

However, in this embodiment of this application, the customer premises equipment 2 and the terminal device 13 perform incoming call indication and answer actions based on messages sent through wireless connections. The answer message sent by the terminal device 13 indicates the type of the call. The customer premises equipment 12 may perform media negotiation with the network side based on the audio and/or video codec type supported by the terminal device 13. The terminal device 13 may support codecs such as high-definition voice EVS-WB, EVS-SWB, and EVS-FB. In addition, when the terminal device 13 further supports video calls, video communication may be negotiated as a communication mode, and video formats such as low definition, standard definition, and high definition are supported.

In addition, in this embodiment of this application, the customer premises equipment 12 may send, through wireless connection, the call destined for the customer premises equipment 12 from the network side to one or more terminal devices 13 that are recorded as being in the online state in the registration process. A user may select a most convenient terminal device 13 to answer the call. In addition, when answering the call, the user can move freely within coverage of a wireless communications network.

In the call originating flow and call terminating flow in the foregoing embodiments, if the user is using, for example, the terminal device 13a for calling and expects to be handed over to, for example, the terminal device 13n for calling, the user may initiate a handover process to the customer premises equipment 12 by using terminal device 13a.

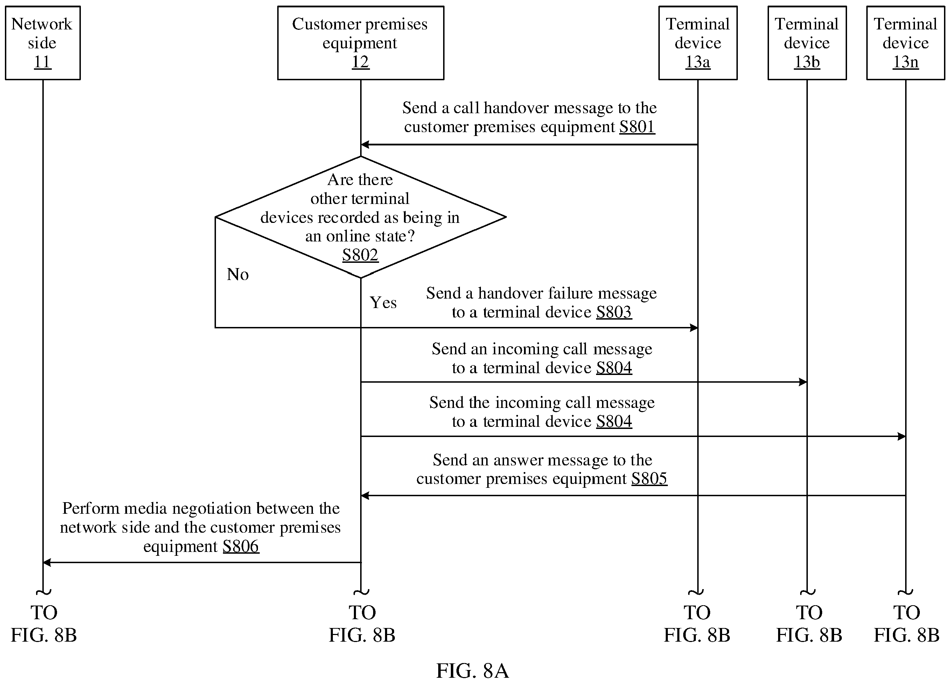

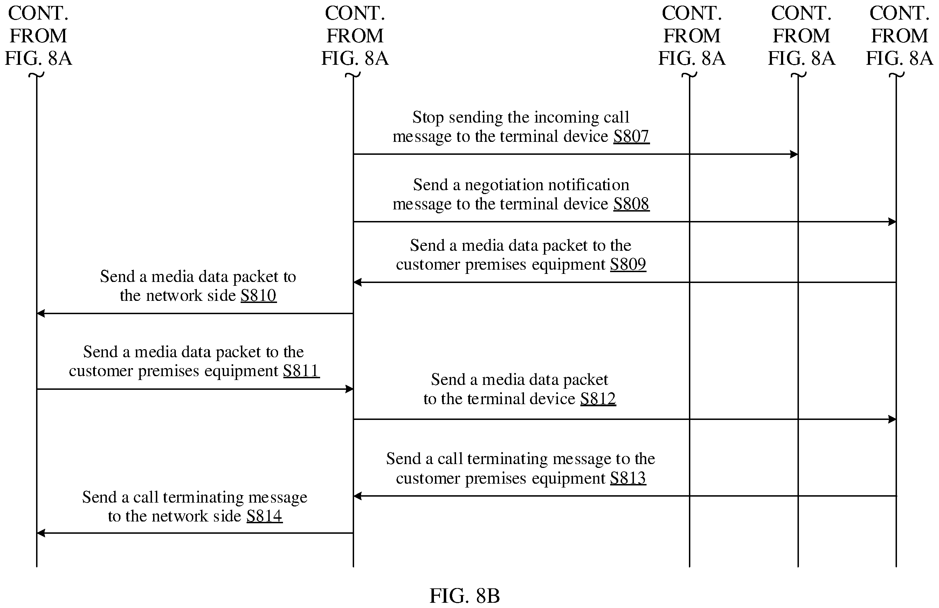

FIG. 8A and FIG. 8B are schematic flowcharts of a handover process 800 between a customer premises equipment 12 and a terminal device 13. It should be noted that, although in this embodiment of this application, steps of a method are presented in a specific sequence, the sequence of the steps may be changed in different embodiments, and in some embodiments, one or more steps shown in the sequence in this specification may be performed simultaneously.

As shown in FIG. 8A and FIG. 8B, the handover process 800 includes the following steps.

S801. A terminal device 13 (for example, a terminal device 13a) sends a call handover message to a customer premises equipment 12, where the call handover message is used to indicate the customer premises equipment 12 to perform call handover.

S802. The customer premises equipment 12 determines whether there are one or more other terminal devices 13 recorded as being in an online state in addition to the terminal device 13a. If there are no one or more other terminal devices 13 recorded as being in the online state in addition to the terminal device 13a, perform step S803. If there are one or more other terminal devices 13 recorded as being in the online state in addition to the terminal device 13a, perform steps S804 to S815.

S803. The customer premises equipment 12 sends a handover failure message to the terminal device 13a, where the handover failure message is used to indicate to the terminal device 13a that the call handover fails.

S804. The customer premises equipment 12 sends an incoming call message to the one or more other terminal devices 13 (for example, terminal devices 13b and 13n).

In some examples, the customer premises equipment 12 may simultaneously send the incoming call message to a plurality of other terminal devices 13.

In some other examples, the customer premises equipment 12 may send the incoming call message to the plurality other terminal devices 13 in a predefined sequence (for example, based on preset priorities of the terminal devices 13). For details, refer to the corresponding description in the foregoing embodiment.

S805. A terminal device 13 (for example, a terminal device 13n) that receives the incoming call message sends an answer message to the customer premises equipment 12. For details, refer to the corresponding description in the foregoing embodiment.

For example, the answer message may indicate that a call type is video call, a video codec type supported by the terminal device 13 is H.264 codec, and a video resolution is high-definition resolution.

S806. The customer premises equipment 12 performs media negotiation with a network side 11 for the terminal device 13 (for example, the terminal device 13n) described in S805. For details, refer to the corresponding description in the foregoing embodiment.

S807. The customer premises equipment 12 stops sending the incoming call message to another terminal device 13 (for example, a terminal device 13b).

S808. The customer premises equipment 12 sends a negotiation notification message to the terminal device 13 (for example, the terminal device 13n) described in S805. For details, refer to the corresponding description in the foregoing embodiment.

S809. The terminal device 13 (for example, the terminal device 13n) described in S805 sends a media data packet to the customer premises equipment 12.

In an example, the terminal device 13 may send the media data packet, for example, an H.264 encoded audio data packet, based on a media negotiation result and an address of the customer premises equipment 12 for receiving and/or sending the media data packet.

S810. The customer premises equipment 12 sends a media data packet from the terminal device 13 (for example, the terminal device 13n) described in S805 to the network side 11.

When sending the media data packet to the network side 11, the customer premises equipment 12 does not carry an ID of the terminal device 13.

S811. The network side 11 sends a media data packet, for example, an H.264-encoded video data packet, from the called party to the customer premises equipment 12.

The media data packet from the called party is destined for the customer premises equipment 12 rather than the terminal device 13.

S812. The customer premises equipment 12 sends a media data packet from a called party to the terminal device 13 (for example, the terminal device 13n) described in S805.

The customer premises equipment 12 may send the media data packet based on the address of the terminal device 13 for receiving and/or sending the media data packet.

S813. The terminal device 13 (for example, the terminal device 13n) described in S805 sends a call terminating message to the customer premises equipment 12, where the call terminating message indicates that the call ends.

In another example, in S813, the network side 11 sends a call terminating message to the customer premises equipment 12.

S814. The customer premises equipment 12 sends a call terminating message to the network side 11.

In another example, in S814, the customer premises equipment 12 sends a call terminating message to the terminal device 13 described in S805.

Table 4 shows an example of control-plane signaling between the customer premises equipment 12 and the terminal device 13 involved in the handover process. As shown in Table 4, a command part of the call handover message may include a character string with a value of "0x06", a terminal device ID part may include a MAC address of the terminal device 13, for example, a MAC address of the terminal device 13a, and a message body part may be empty. A command part of the incoming call message may include a character string with a value of "0x13", a terminal device ID part may include a MAC address of the terminal device 13, for example, a MAC address of the terminal device 13b or 13n, and a message body part may be empty. A command part of the answer message may include a character string with a value of "0x03", a terminal device ID part may include a MAC address of the terminal device 13, for example, a MAC address of the terminal device 13n, and a message body part may indicate that the call type selected by the terminal device 13n is video call and the video resolution is high-definition resolution, and indicate the IP address and port number that are of the terminal device 13n for receiving and/or sending a media data packet. A command part of the negotiation notification message may include a character string with a value of "0x12", a terminal device ID part may include a MAC address of the terminal device 13, for example, a MAC address of the terminal device 13n, and a message body part may indicate that the final call type is video call, the final video resolution is high-definition resolution, and the final video codec type is H.264, and indicate the IP address and port number that are of the customer premises equipment 12 for receiving and/or sending a media data packet. A command part of the call terminating message sent by the customer premises equipment 12 may include a character string with a value of "0x14", a terminal device ID part may include a MAC address of the terminal device 13, for example, a MAC address of the terminal device 13a or 13n, and a message body part may be empty. A command part of the call terminating message sent by the terminal device 13 may include a character string with a value of "0x04", a terminal device ID part may include a MAC address of the terminal device 13, for example, a MAC address of the terminal device 13n, and a message body part may be empty.

It should be noted that a structure and content of the control-plane signaling involved in the handover process are not limited to those shown in Table 4.

**Table 4 Control-plane signaling between a customer premises equipment and a terminal device involved in a handover process**

| Command | Terminal device ID | Message body | Message description |
|---|---|---|---|
| 0x06 | MAC address of the terminal device 13a | | Call handover message |
| 0x13 | Terminal device 13 | | Incoming call message |
| 0x03 | MAC address of the terminal device 13n | Call type: video call | Answer message |
| | | Video resolution: high-definition resolution | |
| | | IP address and port number for receiving and/or sending a media data packet | |
| 0x12 | MAC address of the terminal device 13n | Final call type: video call | Negotiation notification message |
| | | Final video resolution: high-definition resolution | |
| | | Final video codec type: H.264 | |
| | | IP address and port number for receiving and/or sending a media data packet | |
| 0x14 | MAC address of the terminal device 13 | | Call terminating message sent by the customer premises equipment 12 |
| 0x04 | MAC address of the terminal device 13n | | Call terminating message sent by the terminal device 13n |

In the prior art, one customer premises equipment 12 generally has only one RJ 11 interface and therefore, can be connected to only one analog phone, rather than answering calls by using a plurality of terminal devices or randomly switching between a plurality of terminal devices.

However, in this embodiment of this application, when a plurality of terminal devices 13 are registered and online, in a call process, a user may freely switch between the plurality of terminal devices 13 and may further change the type of the call while switching between the terminal devices 13.

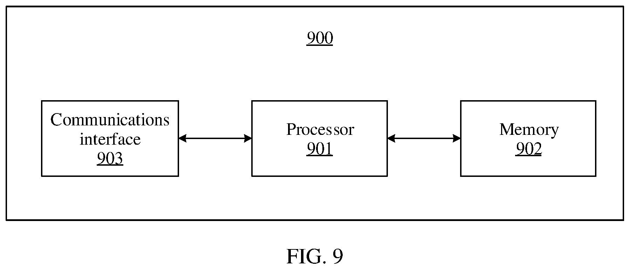

FIG. 9 is a block diagram of an electronic device 900 according to an embodiment of this application. The electronic device 900 may be a customer premises equipment 12 or a terminal device 13. The electronic device 900 may include one or more processors 901. The electronic device 900 may further include a memory 902 and a communications interface 903 that are coupled to the processor 901. Alternatively, the memory 902 may be integrated into the processor 901.

The processor 901 may include one or more single-core or multi-core processors. The processor 902 may include any combination of a general-purpose processor and a dedicated processor (for example, a graphics processing unit, an application processor, a baseband processor, or the like). In this embodiment of this application, the processor 901 may be configured to perform one or more of embodiments shown in FIG. 5A and FIG. 5B to FIG. 8A and FIG. 8B.

The memory 902 may be configured to load and store, for example, data and/or instructions used for the electronic device 900. In an embodiment, the memory 902 may include any proper volatile memory, for example, a proper dynamic random access memory (DRAM). In some other embodiments, for example, the memory 902 may include one or more tangible non-transitory computer-readable media that are configured to store data and/or instructions. The memory 902 may include, but is not limited to, a non-transient tangible arrangement of an article manufactured or formed by a machine or device, including a storage medium, for example, a hard disk or any other type of disk, including a floppy disk, a compact disc, a compact disc read-only memory (CD-ROM), a compact disc rewritable (CD-RW), or a magneto-optical disc; a semiconductor device, for example, a read-only memory (ROM) such as a random access memory (RAM) including a dynamic random access memory (DRAM) or a static random access memory (SRAM), an erasable programmable read-only memory (EPROM), a flash memory, or an electrically erasable programmable read-only memory (EEPROM); a phase change memory (PCM); a magnetic card or an optical card; or any other type of proper medium for storing electronic instructions.

The memory 902 may include instructions or design data, for example, a hardware description language (HDL), and defines a structure, a circuit, an apparatus, a processor, and/or a system feature described in this specification.

These embodiments are also referred to as program products.

The memory 902 may include some storage resources that are physically a part of the electronic device 900, or may be accessed by the electronic device 900, but is not necessarily a part of the electronic device 900. For example, the memory 902 may be accessed over a network through the communications interface 903.

In particular, the memory 902 may include a temporary or persistent copy of an instruction. The instruction may include an instruction that enables, when the instruction is executed by at least one of the processors 902, the electronic device 900 to implement the methods described with reference to FIG. 5A and FIG. 5B to FIG. 8A and FIG. 8B.

The communications interface 903 may include any transceiver module, to provide a signal transmission interface for the electronic device 900.

Embodiments of a mechanism disclosed in this specification may be implemented in hardware, software, firmware, or a combination of these implementations. Embodiments of this application may be implemented as a computer program or program code executed in a programmable system. The programmable system includes at least one processor, a storage system (including a volatile memory, a nonvolatile memory, and/or a storage element), at least one input device, and at least one output device.

The program code may be configured to input instructions, to perform functions described in this specification and generate output information. The output information may be applied to one or more output devices in a known manner. For a purpose of this application, a processing system includes any system having a processor such as a digital signal processor (DSP), a microcontroller, an application-specific integrated circuit (ASIC), or a microprocessor.

The program code may be implemented by using a high-level programming language or an object-oriented programming language, to communicate with the processing system. The program code may alternatively be implemented by using an assembly language or a machine language when needed. Actually, the mechanism described in this specification is not limited to a scope of any particular programming language. In any case, the language may be a compiled language or an interpretive language.

One or more aspects of at least one embodiment may be implemented by using representative instructions stored on a machine-readable storage medium. The instructions represent various logic in a processor, and when the instructions are read by a machine, the mechanism is enabled to act on the logic for performing the technologies described herein. These representations referred to as "IP cores" may be stored in a tangible machine-readable storage medium, and provided for a plurality of customers or production facilities for loading into a manufacturing machine that actually manufactures the logic or the processor.

Such machine-readable storage media may include but is not limited to non-transient tangible arrangements of articles manufactured or formed by machines or devices. The machine-readable storage media include storage media, for example, a hard disk or any other type of disk including a floppy disk, a compact disc, a compact disc read-only memory (CD-ROM), a compact disc rewritable (CD-RW), or a magneto-optical disc; a semiconductor device, for example, a read-only memory (ROM) such as a random access memory (RAM) including a dynamic random access memory (DRAM) or a static random access memory (SRAM), an erasable programmable read-only memory (EPROM), a flash memory, or an electrically erasable programmable read-only memory (EEPROM); a phase change memory (PCM); a magnetic card or an optical card; or any other type of proper medium for storing electronic instructions.

Therefore, embodiments of this application further include a non-transient tangible machine-readable medium. The medium includes instructions or design data, for example, a hardware description language (HDL), and defines a structure, a circuit, an apparatus, a processor, and/or a system feature described in this specification. These embodiments are also referred to as program products.

## Claims

1. A communication method for use in a customer premises equipment, comprising:
implementing, by the customer premises equipment in a wireless communication mode, a call between the customer premises equipment and a network side on a first terminal device, wherein the call comprises a call terminating flow and a call originating flow,
in the call terminating flow, the implementing a call between the customer premises equipment and a network side on a first terminal device comprises: sending, by the customer premises equipment, the call to the first terminal device in the wireless communication mode in response to the call received from the network side and destined for the customer premises equipment; and
in the call originating flow, the implementing a call between the customer premises equipment and a network side on a first terminal device comprises: initiating, by the customer premises equipment, the call to the network side in response to a call setup message received from the first terminal device in the wireless communication mode.

2. The method according to claim 1, further comprising:
before implementing the call by the customer premises equipment on the first terminal device, in the wireless communications mode,
receiving a registration request message from the first terminal device; and
when determining that the first terminal device meets a predefined condition, recording the first terminal device as being in an online state, and sending a registration success message to the first terminal device.

3. The method according to claim 2, further comprising:
determining, by the customer premises equipment, a time interval between a time at which the registration request message is last received from the first terminal device and a current time; and
when the customer premises equipment determines that the time interval is greater than or equal to a predefined time interval, recording the first terminal device as being in an offline state.

4. The method according to claim 2 or 3, wherein in the call terminating flow, the sending, by the customer premises equipment, the call to the first terminal device comprises:
sending an incoming call message to the first terminal device;
receiving an answer message from the first terminal device, wherein the answer message indicates that a type of the call is voice call or video call;
performing media negotiation with the network side based on an audio or video codec type supported by the first terminal device and the type of the call;
sending a negotiation notification message to the first terminal device, wherein the negotiation notification message comprises a result of the media negotiation; and
sending a media data packet from the network side to the first terminal device and/or sending the media data packet from the first terminal device to the network side.

5. The method according to claim 4, wherein the registration request message or the answer message received from the first terminal device comprises the audio and/or video codec type supported by the first terminal device.

6. The method according to claim 4 or 5, wherein the answer message further comprises an address of the first terminal device for receiving and/or sending the media data packet; and
the negotiation notification message further comprises an address of the customer premises equipment for receiving and/or sending the media data packet.

7. The method according to any one of claims 4 to 6, in the call terminating flow, further comprising the following operations of the customer premises equipment in the wireless communications mode:
sending the incoming call message to a second terminal device recorded as being in an online state; and
sending a call terminating message to the second terminal device in response to the answer message received from the first terminal device.

8. The method according to claim 2 or 3, wherein in the call originating flow, the call setup message indicates that a type of the call is voice call or video call and indicates an identifier of a called user, and the initiating, by the customer premises equipment, the call to the network side comprises:
sending a call request message to the network side, wherein the call request message comprises the type of the call, an audio or video codec type supported by the first terminal device, and the identifier of the called user;
sending a ringback tone message to the first terminal device, wherein the ringback tone message indicates the first terminal device to play a ringback tone;
performing media negotiation with the network side based on the audio or video codec type supported by the first terminal device and the type of the call;
sending a negotiation notification message and a call answer indication to the first terminal device, wherein the negotiation notification message comprises a result of the media negotiation; and
sending a media data packet from the network side to the first terminal device and/or sending the media data packet from the first terminal device to the network side.

9. The method according to claim 8, wherein the registration request message or the call setup message comprises the audio and/or video codec type supported by the first terminal device.

10. The method according to claim 8 or 9, wherein the call setup message received from the first terminal device further comprises an address of the first terminal device for receiving and/or sending the media data packet; and
the negotiation notification message further comprises an address of the customer premises equipment for receiving and/or sending the media data packet.

11. The method according to any one of claims 1 to 10, wherein the wireless communication mode is a Wi-Fi communication mode.

12. The method according to any one of claims 8 to 10, wherein an identifier of the customer premises equipment is a user identifier of the customer premises equipment or a device identifier of the customer premises equipment.

13. A communication method for use in a terminal device, comprising:
establishing a connection to a customer premises equipment in a wireless communication mode, and implementing a call between the customer premises equipment and a network side for the customer premises equipment, wherein
the call comprises a call originating flow and a call terminating flow,
in the call terminating flow, the implementing a call between the customer premises equipment and a network side comprises: receiving, by the terminal device from the customer premises equipment in a wireless communication mode, a call of the network side that is destined for the customer premises equipment; and
in the call originating flow, the implementing a call between the customer premises equipment and the network side comprises: sending, by the terminal device in a wireless communication mode, a call setup message to the customer premises equipment, so that the customer premises equipment initiates a call to the network side.

14. The method according to claim 13, further comprising: before implementing, by the terminal device, the call for the customer premises equipment, in the wireless communications mode,
sending a registration request message to the customer premises equipment; and
receiving a registration success message from the customer premises equipment.

15. The method according to claim 13 or 14, wherein in the call terminating flow, the receiving, by the terminal device from the customer premises equipment, a call of the network side that is destined for the customer premises equipment comprises:
receiving an incoming call message from the customer premises equipment;
sending an answer message to the customer premises equipment, wherein the answer message indicates that a type of the call is voice call or video call;
receiving a negotiation result message from the customer premises equipment, wherein the negotiation result message comprises a result of media negotiation performed between the customer premises equipment and the network side based on an audio or video codec type supported by the terminal equipment and the type of the call; and
receiving a media data packet from the customer premises equipment and/or sending a media data packet to the customer premises equipment.

16. The method according to claim 15, wherein the registration request message or the answer message comprises the audio and/or video codec type supported by the terminal device.

17. The method according to claim 15 or 16, wherein the answer message comprises an address of the terminal device for receiving and/or sending the media data packet; and
the negotiation result message comprises an address of the customer premises equipment for receiving and/or sending the media data packet.

18. The method according to claim 13 or 14, wherein in the call originating flow, the call setup message indicates that a type of the call is voice call or video call and indicates an identifier of a called user, and the method further comprises:
receiving a ringback tone message from the customer premises equipment and playing a ringback tone in response to the ringback tone message;
receiving a negotiation result message from the customer premises equipment, wherein the negotiation result message comprises a result of media negotiation performed between the customer premises equipment and the network side based on an audio or video codec type supported by the terminal equipment and the type of the call; and
sending a media data packet to the customer premises equipment, and/or receiving the media data packet from the customer premises equipment.

19. The method according to claim 18, wherein the registration request message or the call setup message comprises the audio and/or video codec type supported by the terminal device.

20. The method according to claim 18 or 19, wherein the call setup message comprises an address of the terminal device for receiving and/or sending the media data packet; and
the negotiation notification message comprises an address of the customer premises equipment for receiving and/or sending the media data packet.

21. The method according to any one of claims 15 to 17, wherein in the call terminating flow, the receiving, by the terminal device from the customer premises equipment, a call of the network side that is destined for the customer premises equipment further comprises:
sending a call handover message to the customer premises equipment; and
receiving a handover failure message from the customer premises equipment, or receiving a call terminating message from the customer premises equipment.

22. The method according to any one of claims 18 to 20, in the call originating flow, further comprising:
sending, by the terminal device, a call handover message to the customer premises equipment; and
receiving, by the terminal device, a handover failure message from the customer premises equipment, or receiving a call terminating message from the customer premises equipment.

23. The method according to any one of claims 13 to 22, wherein the wireless communication mode is a Wi-Fi communication mode.

24. A machine-readable medium, wherein the medium stores instructions, and when the instructions run on a machine, the machine is enabled to perform the communication method according to any one of claims 1 to 12 and/or the communication method according to any one of claims 13 to 23.

25. A system, comprising a customer premises equipment and a terminal device, wherein the customer premises equipment is configured to perform the communication method according to any one of claims 1 to 12, and the terminal device is configured to perform the communication method according to any one of claims 13 to 23.
